# EUROPÄISCHE PATENTSCHRIFT

(11) **EP 2 136 625 B1**
(45) Veröffentlichungstag und Bekanntmachung des Hinweises auf die Patenterteilung: **29.09.2010**
(21) Anmeldenummer: 08735163.1
(22) Anmeldetag: 10.04.2008
(51) Int. Cl.: A01N 33/12, A01P 13/00

(54) **VERWENDUNG EINES MITTELS ZUR GLEICHZEITIGEN BEKÄMPFUNG VON UNKRAUTSAMEN, ALGEN, PHYTOPATHOGEN BAKTERIEN, PILZEN, VIREN UND VIROIDEN**
USE OF A MEANS FOR THE SIMULTANEOUS PREVENTION OF WEEDS, ALGAE, PHYTOPATHOGENIC BACTERIA, FUNGI, VIRUSES AND VIROIDS
UTILISATION D'UN AGENT POUR LA LUTTE SIMULTANÉE CONTRE LES GRAINES DE MAUVAISES HERBES, LES ALGUES, LES BACTÉRIES PHYTOPATHOGÈNES, LES CHAMPIGNONS, LES VIRUS ET LES VIROÏDES

(30) Priorität: 23.04.2007 WO PCT/EP2007/003557
(43) Veröffentlichungstag der Anmeldung: 30.12.2009
(73) Patentinhaber: Menno Chemie-Vertrieb GmbH, 22850 Norderstedt (DE)
(72) Erfinder: NEVERMANN, Jan, 22397 Hamburg (DE)
(74) Vertreter: Becker Kurig Straus
(86) Internationale Anmeldenummer: PCT/EP2008/002855
(87) Internationale Veröffentlichungsnummer: WO 2008/128658

(56) Entgegenhaltungen:
- EP-A- 1 634 942
- DE-A1- 1 542 830
- DATABASE CA [Online] CHEMICAL ABSTRACTS SERVICE, COLUMBUS, OHIO, US; G.H.EGLEY ET AL: "Glyphosate and paraquat effects on weed seed germination and seedling emergence" XP002505065 gefunden im STN-INTERNATIONAL Database accession no. 90:198748 & WEED SCIENCE, Bd. 26, Nr. 3, 1978, Seiten 249-251,
- W.KOCH: "Die algizide Wirkung chemischer Substanzen" NACHRICHTENPL. DEUTSCH. PFLANZENSCHUTZD., Bd. 25, 1973, Seiten 37-40, XP008098948
- DATABASE CA [Online] CHEMICAL ABSTRACTS SERVICE, COLUMBUS, OHIO, US; M.ADACHI ET AL.: "Chlorella assay of the activity of herbicides" XP002505066 gefunden im STN-INTERNATIONAL Database accession no. 76:42559 & ZASSO KENKYU, Nr. 11, 1971, Seiten 54-58,
- DATABASE CA [Online] CHEMICAL ABSTRACTS SERVICE, COLUMBUS, OHIO, US; D.LAZARESCU ET AL.: "Experimental results on control of water "bloom" using algicides" XP002505067 gefunden im STN-INTERNATIONAL Database accession no. 90:133878 & STUDII DE ALIMENTARI CU APA, Bd. 10, 1977, Seiten 195-202,
- H.J. HUECK ET AL: "Bacteriostatic, Fungistatic, and Algistatic Activity of Fatty Nitrogen Compounds" APPLIED MICROBIOLOGY, Bd. 14, Nr. 3, Mai 1966 (1966-05), Seiten 308-319, XP002505064
- DATABASE WPI Week 198649 Thomson Scientific, London, GB; AN 1986-321452 XP002469808 & JP 61 236705 A (DAIICHI KOGYO SEIYAKU CO LTD) 22. Oktober 1986 (1986-10-22)
- DATABASE CROPU [Online] H.AVIKAINEN ET AL.: "The Phytotoxicity of Disinfectants and Their Effect at Different Temperatures" XP002469807 gefunden im STN-INTERNATIONAL Database accession no. 1993-86607 & AGRIC.SCI.FINLAND, Bd. 2, Nr. 2, 1993, Seiten 161-168,
- DATABASE WPI Week 198805 Thomson Scientific, London, GB; AN 1988-033930 XP002469809 & JP 62 294603 A (SS PHARMACEUTICAL KK) 22. Dezember 1987 (1987-12-22)

## Beschreibung

### Gebiet der Erfindung

Die vorliegende Erfindung betrifft die Verwendung eines Mittels zur gleichzeitigen Bekämpfung von Unkrautsamen, Algen, phytopathogenen Bakterien, Pilzen, Viren und Viroiden auf Böden, Flächen und Arbeitsgeräten in Gewächshäusern, Gerätehäusern und/oder Gartenhäusern.

### Stand der Technik

Im gesamten Umfeld der Pflanzenproduktion, wie im Zierpflanzen- und Nutzpflanzenbau, in im Wesentlichen geschlossenen Räumen, wie beispielsweise Gewächshäusern, Glashäusem etc. ist es notwendig, Böden und Oberflächen, beispielsweise von Gewächshäusern, Stellflächen, Töpfen, Multiplatten und Gerätschaften, von Samen von Unkräutern und von Algen zu befreien. Unter Unkräutern sind in diesem Zusammenhang Pflanzen der spontanen Begleitvegetation in Kulturpflanzenbeständen zu verstehen, die dort nicht gezielt angebaut werden und aus dem Samenpotential des Bodens oder über Zuflug zur Entwicklung kommen. Eine Pflanze wird als Unkraut bezeichnet, wenn sie unerwünscht ist. Es kann sich um unerwünschte Wildpflanzen oder um spontan aufwachsende Kulturpflanzen handeln. Auch ist der Begriff nicht nur auf Kräuter im eigentlichen Sinne beschränkt, sondern beinhaltet ebenfalls Gräser, Farne, Moose und holzige Pflanzen. Hierbei sind besonders die Samen von Sagina procumbens (Stemmoos, Niederliegendes Mastkraut), Veronica peregrina (Ausländisches Ehrenpreis), Poa annua (Einjähriges Rispengras), Cardamine hirsuta (Springkraut, Bewimpertes Schaumkraut, Garten-Schaumkraut) und Senecio vulgaris (Gemeines Kreuzkraut, Gemeines Greiskraut) problematisch. Wird das Entfernen der Unkrautsamen versäumt, so werden Unkrautsamen, welche den Böden und Oberflächen anhaften, verschleppt, die Unkräuter überwuchern die Kulturen, schmälern als Wettbewerbs-/Konkurrenzpflanzen den Ertrag oder machen den wirtschaftlichen Anbau unmöglich.

Für einen vergleichbaren Einsatz im Freiland sind Herbizide schon heute nicht mehr zulassungsfähig. Weil bestehende Zulassungen für Herbizide jedoch auch in geschlossenen Räumen zunehmend nicht mehr erteilt oder verlängert werden, bestehen zunehmend Probleme. So ist beispielsweise der Wirkstoff Methylbromid wegen der Belastung als Treibhausgas zukünftig nicht mehr verfügbar. Mangels geeigneter Herbizide bliebe jedoch nur die Behandlung der Böden und Oberflächen mit heißem Wasser (mindestens 60°C), was aus arbeitssicherheitsrechtlichen Gesichtspunkten und wirtschaftlichen Aspekten nicht praktikabel ist.

Bei der Suche nach neuen, umweltfreundlicheren Herbiziden können beispielsweise Ammoniumionen in Betracht gezogen werden.

Herbizide Säuren wurden in der Vergangenheit häufig in ihre Salze überführt, um ihre Löslichkeit in Wasser zu erhöhen. JP 43-005837 B, DT 16 67 964, DE 690 32 940 T2 und EP 0 066 946 A1 sind Beispiele für eine Vielzahl von Dokumenten, welche neben der Verwendung saurer herbizider Verbindungen auch die Verwendung ihrer quaternären Ammoniumsalze beschreiben. Den Kationen wird jedoch keine eigene herbizide Wirkung zugeschrieben.

Die JP 61-236705 A offenbart allerdings, dass quarternäre Ammoniumionen tatsächlich selbst herbizide Wirkung zeigen. Es wird die Verwendung von quaternären Ammoniumsulfiten zur Bekämpfung von blättrigen Unkrautformen, wie indischer Malve, Tageswinde, Sauergras und Hühnerhirse beschrieben.

Avikainen et al. beschreiben in Agric. Sci. Finl. 2 (1993), 161-168 die schädigende Wirkung quarternärer Ammoniumsalze gegenüber den Setzlingen unterschiedlicher Gemüsearten. Bisher bestand im Stand der Technik das Vorurteil, dass quarternäre Ammoniumsalze zur Bekämpfung von Pflanzensamen ungeeignet seien. So offenbart beispielsweise die DE 1 542 830 A1, dass quarternäre Ammoniumsalze zur Behandlung von Getreidesamen geeignet sind, ohne dabei die Samen zu schädigen. Die Behandlung dient einer Beeinflussung des Pflanzenhabitus, indem das Längenwachstum der sich entwickelnden Weizenhalme gehemmt wird, während gleichzeitig eine Vergrößerung des Halmdurchmessers erfolgt. Die Verwendung von quaternären Ammoniumsalzen zur Regulierung des Pflanzenwachstums ist im Übrigen auch aus der JP 62-294603 A bekannt.

Zusammenfassend ist festzustellen, dass im Stand der Technik keine Verwendung von Ammoniumionen zur Bekämpfung von Dauerformen von Unkräutern (Unkrautsamen) und Algen bekannt ist. Diese Dauerformen sind jedoch im Vergleich zu blättrigen Pflanzenstadien besonders schwierig zu bekämpfen.

G.H. Egley et al. beschreiben die keimungshemmende Wirkung von Paraquat (1,1'-Dimethyl-4,4'-bipyridinium) auf bestimmte Gräsersamen (Weed Science (1978), 26(3), 249-251).

Um Zier- und Nutzpflanzen umfassend vor Schädigungen zu schützen ist es jedoch nicht ausreichend nur Unkrautsamen und Algen zu bekämpfen. Eine weitere Gefahr geht von Pflanzenpathogenen, wie Bakterien, Pilzen und Viren aus. In der modernen Pflanzenzucht ist es wünschenswert, diese durch Applikation eines Desinfektionsmittels im selben Arbeitsgang zusammen mit Unkrautsamen und Algen abzutöten.

Umfassend anwendbare Desinfektionsmittel mit hinreichender Wirksamkeit gelangen derzeit nur noch stark begrenzt zur Anwendung. Grund dafür sind die Nebenwirkungen der Agenzien. Davon sind insbesondere aldehydische Wirkstoffe betroffen, wie z. B. Formaldehyd, Glutardialdehyd, Succindialdehyd oder Glyoxal und deren aldehydabspaltenden Derivate.

Die entstandene Lücke wurde u.a. durch Benzoesäure, Monohydroxy-, Dihydroxy- oder Trihydroxybenzoesäuren und durch Phenolderivate als mikrobizid wirksame Agentien mit günstigen toxikologischen, ökotoxikologischen und materialverträglichen Eigenschaften geschlossen.

In der EP 1 534 071 B1 wurde gefunden, dass die Verwendung von Monohydroxy-, Dihydroxy- oder Trihydroxybenzoesäure in Kombination mit Phenolderivaten besonders vorteilhaft ist, da diese eine synergistische Wirksamkeit aufweisen.

Zudem ist aber auch die Verwendung von quarternären Ammoniumionen als Definfektionsmittel aus der EP 1 634 942 A1, der EP 1 126 014 A1, der JP 05-311196 A und der US 5,529,713 bekannt.

### Beschreibung der Erfindung

Es ist eine Aufgabe der vorliegenden Erfindung, die Verwendung eines Mittels bereitzustellen, welche zur gleichzeitigen Bekämpfung von Unkrautsamen, Algen, phytopathogenen Bakterien, Pilzen, Viren und Viroiden auf Böden und Oberflächen in Gewächshäusern, Gerätehäusern und Gartenhäusern geeignet ist und so gleichzeitige Desinfektion und Abtötung unerwünschter Unkrautsamen und Algen in einem Arbeitsgang ermöglicht. Bei den Böden und Oberflächen kann es sich beispielsweise um Böden und Oberflächen von Gewächshäusern, Stellflächen, Töpfen, Multiplatten und Gerätschaften handeln. Es soll ferner eine gute Umweltverträglichkeit aufweisen, um die gesetzlichen Anforderungen für seine Zulassung zu erfüllen.

Diese Aufgabe wird erfindungsgemäß durch Verwendung eines Mittels gelöst, welches wenigstens ein Tetraalkylammoniumhalogenid als Wirkstoff, sowie gegebenenfalls übliche Zusatzstoffe und Hilfsstoffe, wie insbesondere UV-Absorber, enthält.

Auch wenn die herbizide Wirkung von Ammoniumionen gegenüber blättrigen Pflanzenformen im Stand der Technik bekannt ist, so wurde ihnen bisher jedoch nie eine Wirkung gegen Unkrautsamen und Algen zugeschrieben. Vielmehr wurde angenommen, dass ihre Anwendung auf Pflanzensamen zwar zur Regulierung des Pflanzenwachstums geeignet sei, die Pflanzensamen dabei jedoch nicht schädige. Überraschenderweise wurde nun gefunden, dass Lösungen von Tetraalkylammoniumhalogeniden herbizide Wirkung gegen Unkrautsamen und Algen aufweisen. Von diesen Verbindungen sind beim bestimmungsgemäßen Umgang keine Umweltbeeinträchtigungen zu erwarten. Zudem ist bekannt, dass quarternäre Ammoniumsalzen gleichzeitig eine desinfizierende Wirkung aufweisen.

In einer bevorzugten Ausführungsform weist das Tetraalkylammoniumhalogenid n-Alkylgruppen auf, bevorzugt unabhängig voneinander C₁- bis C₁₀-n-Alkylgruppen.

In einer weiteren bevorzugten Ausführungsform ist das Halogenidion des Tetraalkylammoniumhalogenids Chlorid.

Besonders bevorzugt ist das Tetraalkylammoniumhalogenid Didecyldimethylammoniumchlorid (DDAC). Dieses ist nach Ergebnissen mehrerer Abbautests (OECD 301 A, 302 B, 303 A) biologisch abbaubar. Weiterhin besitzt DDAC kein Bioakkumulationspotential (BCF 81, Methode EPA-FIFRA, Sonnenbarsch, 46 d).

In einer weiteren bevorzugten Ausführungsform umfasst das Mittel zur erfindungsgemäßen Verwendung weiterhin ein nichtionisches Tensid, bevorzugt einen Polyalkylenglykolether bzw. ein Fettalkoholethoxylat gemäß Formel I:

H₃C(CH₂)ₓ-O(CH₂-CH₂-O)_{y}-H (I)

wobei x = 10 bis 17 und y = 1 bis 25 ist.

Besonders bevorzugt handelt es sich bei dem nichtionischen Tensid um ethoxyliertes Isotridecanol (x = 12), welches zu 90% biologisch abbaubar ist.

In einer weiteren bevorzugten Ausführungsform umfasst das Mittel zur erfindungsgemäßen Verwendung weiterhin einen grad- oder verzweigtkettigen C₁- bis C₄-Alkohol, bevorzugt Propan-2-ol.

Ein Konzentrat des erfindungsgemäßen Mittels ist bevorzugt eine Lösung, die aus 30 - 35 Gew.-% Tetraalkylammoniumhalogenid, 15 - 20 Gew.-% Fettalkoholethoxylat, 5 - 10 Gew.-% eines Alkohols und als Rest (auf 100 Gew.-%) Wasser besteht. Dieses Konzentrat wird vor der Verwendung bevorzugt im Verhältnis 1:20 bis 1:200 mit Wasser verdünnt.

Ein erfindungsgemäßes Mittel-Konzentrat, bestehend aus
32,5 Gew.-% Didecyldimethylammoniumchlorid,
17,5 Gew.-% ethoxyliertes Isotridecanol,
7,5 Gew.-% Propan-2-ol und
42,5 Gew.-% Wasser
weist die folgenden ökotoxischen Wirkungen auf:

| | |
|---|---|
| Fischtoxizität (LC50), akut, 96 h, Forelle nach OECD 203 | 3,56 mg/L |
| Daphnientoxizität (EC50), akut, 48 h, Daphnia magna nach OECD 202 I | 0,053 mg/L |
| Algentoxizität (EbC50), 72 h, Ankristodesmus bibraianus nach OECD 201 | 0,2 mg/L |

Beim bestimmungsgemäßen Umgang sind somit keine Umweltbeeinträchtigungen zu erwarten.

Um eine verbesserte desinfizierende Wirkung zu erhalten wird erfindungsgemäß bevorzugt ein Mittel verwendet, welches Benzoesäure und/oder mindestens eine Monohydroxy-, Dihydroxy- oder Trihydroxybenzoesäure, umfasst. Als Monohydroxybenzoesäuren sind die 2-, 3- und 4-Hydroxybenzoesäure zu verstehen. Als Dihydroxybenzoesäuren sind die 2,3-, 2,4-, 2,5-, 2,6-, 3,4- und 3,5-Dihydroxybenzoesäure zu verstehen. Als Trihydroxybenzoesäuren sind die 2,3,4-, 2,4,6- und 3,4,5-Trihydroxybenzoesäure zu verstehen.

Um die Wirksamkeit des Mittels gegen Pflanzenpathogene noch weiter zu steigern, kann es weiterhin mindestens ein Phenolderivat umfassen. Phenolderivate sind bevorzugt ausgewählt aus der Gruppe, bestehend aus 2-Isopropyl-5-methylphenol, 2-, 3- oder 4-Methylphenol, Hexylresorcin, 2-Phenylphenol, 2-Methoxyphenol, 3-Methyl-4-chlorphenol, 3,5-Dimethyl-4-chlorphenol und 2-Benzyl-4-chlorphenol.

Ein weiteres beispielhaftes Konzentrat des erfindungsgemäßen Mittels ist eine Lösung, die aus 30 - 35 Gew.-% Tetraalkylammoniumhalogenid, 15 - 20 Gew.-% Fettalkoholethoxylat, 5 - 10 Gew.-% eines Alkohols, 5 - 40 Gew.-% Benzoesäure und/oder mindestens einer Monohydroxy-, Dihydroxy- oder Trihydroxybenzoesäure und als Rest (auf 100 Gew.-%) Wasser besteht. Auch dieses Konzentrat wird vor der Verwendung bevorzugt im Verhältnis 1:20 bis 1:200 mit Wasser verdünnt.

Die folgenden Beispiele dienen dazu die vorliegende Erfindung näher zu erläutern, ohne sie dabei einzuschränken.

### Beispiele

Im Laborversuch wurden im Vorjahr gewonnene und getrocknete Unkrautsamen von Sagina procumbens (100 Samen pro Wiederholung), Veronica peregrina (100 Samen pro Wiederholung), Poa annua (50 mg pro Wiederholung), Cardamine hirsuta (100 Samen pro Wiederholung) und Senecio vulgaris (50 mg pro Wiederholung) für eine gegebene Zeit (siehe Tabelle 1) in ein erfindungsgemäßes Mittel eingelegt. Dieses Mittel wurde erhalten, indem ein Konzentrat aus
32,5 Gew.-% Didecyldimethylammoniumchlorid,
17,5 Gew.-% ethoxyliertes Isotridecanol,
7,5 Gew.-% Propan-2-ol und
42,5 Gew.-% Wasser
in einem bestimmten Verhältnis (siehe Tabelle 1) mit Wasser verdünnt wurde. Nach der Behandlung wurden die Samen in einem Gewächshaus, bei einer Umgebungstemperatur von 20°C in 1,5 L-Containern in Torfkultursubstrat (TKS 1) ausgesät. 14 Tage nach Behandlung erfolgte eine Bonitur (Erhebung von pflanzlichen Merkmalen) durch Auszählen der gekeimten Samen. Es wurden 4 Wiederholungen pro Versuchsglied durchgeführt.

In einem Kontrollversuch wurden die Unkrautsamen nicht mit der erfindungsgemäßen Behandlungslösung, sondern mit Wasser behandelt.

Die Anzahl der gekeimten Samen sind in Tabelle 1 aufgelistet. Es wurde jeweils der Mittelwert über alle 4 Wiederholungen gebildet. Weiterhin wurde der herbizide Wirkungsgrad der erfindungsgemäßen Verwendung des Mittels in Prozent berechnet, indem der Mittelwert der Anzahl der gekeimten Samen nach erfindungsgemäßer Behandlung mit dem Mittel ins Verhältnis zum Mittelwert der Anzahl der gekeimten Samen in den Kontrollversuchen gesetzt wurde.

Im Rahmen der durchgeführten Untersuchungen konnte in allen getesteten Konzentrationen und bei allen Behandlungszeiten eine exzellente Wirkung der erfindungsgemäßen Verwendung des Mittels festgestellt werden. Die Varianten "1:20 für 24 h bei Sagina procumbens" sowie "1:50 für 16 h bei Veronica peregrina" zeigten mit Wirkungsgraden um 96,5% etwas schwächere Wirkung, die allerdings weiterhin als sehr gut zu bezeichnen ist.

**Tabelle 1**

| **Anzahl der gekeimten Samen** | | | | | | |
|---|---|---|---|---|---|---|
| | **Poa annua** | | | | | |
| | Wdh. 1 | Wdh. 2 | Wdh. 3 | Wdh. 4 | Mittelwert | WG [%] |
| Kontrolle 16 h | 126 | 147 | 146 | 129 | 137,0 | |
| Verdünnung 1:100, 16 h | 0 | 0 | 0 | 0 | 0,0 | **100,0** |
| Kontrolle 8 h | 135 | 128 | 97 | 138 | 124,5 | |
| Verdünnung 1:50, 8 h | 0 | 0 | 0 | 0 | 0,0 | **100,0** |

| | **Cardamine hirsuta** | | | | | |
|---|---|---|---|---|---|---|
| | Wdh. 1 | Wdh. 2 | Wdh. 3 | Wdh. 4 | Mittelwert | WG [%] |
| Kontrolle 16 h Verdünnung 1:100, 16 h | 73 0 | 69 0 | 65 0 | 69 0 | 69,0 0,0 | **100,0** |
| Kontrolle 8 h Verdünnung 1:50, 8 h | 65 1 | 64 0 | 60 0 | 71 0 | 65,0 0,3 | **99,6** |

| | **Sagina procumbens** | | | | | |
|---|---|---|---|---|---|---|
| | Wdh. 1 | Wdh. 2 | Wdh. 3 | Wdh. 4 | Mittelwert | WG [%] |
| Kontrolle 24 h | 34 | 29 | 21 | 56 | 35,0 | |
| Verdünnung 1:20, 24 h | 2 | 1 | 2 | 0 | 1,3 | **96,4** |
| Kontrolle 48 h | 79 | 65 | 74 | 68 | 71,5 | |
| Verdünnung 1:20, 48 h | 0 | 0 | 0 | 0 | 0,0 | **100,0** |
| | | | | | | |

| | **Veronica peregrina** | | | | | |
|---|---|---|---|---|---|---|
| | Wdh. 1 | Wdh. 2 | Wdh. 3 | Wdh. 4 | Mittelwert | WG [%] |
| Kontrolle 16 h | 32 | 27 | 53 | 19 | 32,8 | |
| Verdünnung 1:50, 16 h | 1 | 2 | 1 | 0 | 1,0 | **96,9** |
| Kontrolle 16 h | 47 | 45 | 28 | 55 | 43,8 | |
| Verdünnung 1:20, 16 h | 0 | 0 | 0 | 0 | 0,0 | **100,0** |
| Kontrolle 48 h | 64 | 53 | 59 | 48 | 56,0 | |
| Verdünnung 1:20, 48 h | 1 | 0 | 0 | 0 | 0,3 | **99,6** |

| | **Senecio vulgaris** | | | | | |
|---|---|---|---|---|---|---|
| | Wdh. 1 | Wdh. 2 | Wdh. 3 | Wdh. 4 | Mittelwert | WG [%] |
| Kontrolle 16 h | 72 | 104 | 106 | 103 | 96,3 | |
| Verdünnung 1:100, 16 h | 0 | 0 | 0 | 0 | 0,0 | **100,0** |
| Kontrolle 8 h | 118 | 80 | 117 | 72 | 96,8 | |
| Verdünnung 1:50, 8 h | 0 | 0 | 0 | 0 | 0,0 | **100,0** |

| | | | | | | |
|---|---|---|---|---|---|---|
| Wdh.: Wiederholung WG: Wirkungsgrad | | | | | | |

## Patentansprüche

1. Verwendung eines Mittels, welches wenigstens ein Tetraalkylammoniumhalogenid als Wirkstoff sowie gegebenenfalls weitere übliche Zusatz- und Hilfsstoffe, wie insbesondere UV-Absorber, enthält zur gleichzeitigen Bekämpfung von Unkrautsamen, Algen, phytopathogenen Bakterien, Pilzen, Viren und Viroiden, insbesondere auf Böden, Flächen und Arbeitsgeräten in Gewächshäusern, Gerätehäusern und/oder Gartenhäusern.

2. Verwendung nach Anspruch 1, **dadurch gekennzeichnet, dass** es sich bei den Böden und Oberflächen um Böden und Oberflächen von Gewächshäusern, Stellflächen, Töpfen, Multiplatten und/oder Gerätschaften handelt.

3. Verwendung nach Anspruch 1 oder 2, **dadurch gekennzeichnet, dass** das Tetraalkylammoniumhalogenid n-Alkylgruppen umfasst, bevorzugt unabhängig voneinander C₁- bis C₁₀-n-Alkylgruppen.

4. Verwendung nach einem der Ansprüche 1 bis 3, **dadurch gekennzeichnet, dass** das Halogenidion des Tetraalkylammoniumhalogenids Chlorid ist.

5. Verwendung nach einem der Ansprüche 1 bis 4, **dadurch gekennzeichnet, dass** das Tetraalkylammoniumhalogenid Didecyldimethylammoniumchlorid ist.

6. Verwendung nach einem der Ansprüche 1 bis 5, **dadurch gekennzeichnet, dass** das Mittel weiterhin ein nichtionisches Tensid, bevorzugt einen Polyalkylenglykolether bzw. ein Fettalkoholethoxylat gemäß Formel I, umfasst:
H₃C(CH₂)ₓ-O(CH₂-CH₂-O)_{y}-H (I)
wobei x = 10 bis 17 und y = 1 bis 25 ist, wobei bevorzugt x = 12 ist.

7. Verwendung nach einem der Ansprüche 1 bis 6, **dadurch gekennzeichnet, dass** das Mittel weiterhin einen grad- oder verzweigtkettigen C₁- bis C₄-Alkohol, bevorzugt Propan-2-ol, umfasst.

8. Verwendung nach einem der Ansprüche 1 bis 7, **dadurch gekennzeichnet, dass** es sich bei dem Mittel um ein Konzentrat in Form einer wässerigen Lösung handelt, die aus 30 - 35 Gew,-% Tetraalkylammoniumhalogenid, 15 - 20 Gew.-% Fettalkoholethoxylat, 5 - 10 Gew.-% eines Alkohols und als Rest (auf 100 Gew.-%) Wasser besteht.

9. Verwendung nach Anspruch 8, **dadurch gekennzeichnet, dass** das Konzentrat mit Wasser im Verhältnis 1:20 bis 1:200 verdünnt ist.

10. Verwendung nach einem oder mehreren der Ansprüche 1 bis 7, **dadurch gekennzeichnet, dass** das Mittel zusätzlich Benzoesäure und/oder mindestens eine Monohydroxy-, Dihydroxy- oder Trihydroxybenzoesäure umfasst.

11. Verwendung nach Anspruch 10, **dadurch gekennzeichnet, dass** das Mittel weiterhin mindestens ein Phenolderivat umfasst, bevorzugt ausgewählt aus der Gruppe, bestehend aus 2-Isopropyl-5-methylphenol, 2-, 3- oder 4-Methylphenol, Hexylresorcin, 2-Phenylphenol, 2-Methoxyphenol, 3-Methyl-4-chlorphenol, 3,5-Dimethyl-4-chlorphenol, 2-Benzyl-4-chlorphenol und Mischungen davon.

12. Verwendung nach einem der Ansprüche 10 oder 11, **dadurch gekennzeichnet, dass** es sich bei dem Mittel um ein Konzentrat in Form einer wässerigen Lösung handelt, die aus 30 - 35 Gew.-% Tetraalkylammoniumhalogenid, 15 - 20 Gew.-% Fettalkoholethoxylat, 5 - 10 Gew.-% eines Alkohols, 5 - 40 Gew.-% einer aliphatischen oder aromatischen Carbonsäure und als Rest (auf 100 Gew.-%) Wasser besteht.

13. Verwendung nach Anspruch 12, **dadurch gekennzeichnet, dass** das Konzentrat mit Wasser im Verhältnis 1:20 bis 1:200 verdünnt ist.

## Claims

1. Use of a means including at least one tetraalkylammonium halide as active ingredient as well as optionally further common additives and adjuvants, such as in particular UV absorbers, for the simultaneous combating of weed seeds, algae, phytopathogenic bacteria, fungi, viruses and viroids, in particular on floors, surfaces and tools in greenhouses, tool stores and/or garden sheds.

2. Use according to claim 1, **characterized in that** the floors and surfaces are floors and surfaces of greenhouses, floor spaces required, pots, multi plates and/or equipment.

3. Use according to claim 1 or 2, **characterized in that** the tetraalkylammonium halide comprises n-alkyl groups, preferably independent from each other C₁ to C₁₀ n-alkyl groups.

4. Use according to any one of claims 1 to 3, **characterized in that** the halide ion of the tetraalkylammonium halide is chloride.

5. Use according to any one of claims 1 to 4, **characterized in that** the tetraalkylammonium halide is didecyl dimethyl ammonium chloride.

6. Use according to any one of claims 1 to 5, **characterized in that** the means further comprises a nonionic surfactant, preferably a polyalkylene glycol ether respectively a fatty alcohol ethoxylate of formula I:
H₃C(CH₂)ₓ-O(CH₂-CH₂-O)_{y}-H (I)
wherein x = 10 to 17 and y = 1 to 25, preferably wherein x = 12.

7. Use according to any one of claims 1 to 6, **characterized in that** the means further comprises a linear or branched chain C₁ to C₄ alcohol, preferably 2-propanol.

8. Use according to any one of claims 1 to 7, **characterized in that** the means is a concentrate in form of an aqueous solution consisting of 30-35 % by weight of tetraalkylammonium halide, 15-20 % by weight of fatty alcohol ethoxylate, 5-10 % by weight of an alcohol and as remainder water (to 100 % by weight).

9. Use according to claim 8, **characterized in that** the concentrate is diluted with water in a ratio of 1:20 to 1:200.

10. Use according to one or more of claims 1 to 7, **characterized in that** the means further comprises benzoic acid and/or at least one monohydroxy-, dihydroxy- or trihydroxybenzoic acid.

11. Use according to claim 10, **characterized in that** the means further comprises at least one phenolic derivative, preferably selected from the group consisting of 2-isopropyl-5-methylphenol, 2-, 3- or 4-methylphenol, hexylresorcinol, 2-phenylphenol, 2-methoxyphenol, 3-methyl-4-chlorophenol, 3,5-dimethyl-4-chlorophenol, 2-benzyl-4-chlorophenol and mixtures thereof.

12. Use according to any one of claims 10 or 11, **characterized in that** the means is a concentrate in form of an aqueous solution consisting of 30-35 % by weight of tetraalkylammonium halide, 15-20 % by weight of fatty alcohol ethoxylate, 5-10 % by weight of an alcohol, 5-40 % by weight of an aliphatic or aromatic carboxylic acid and as remainder water (to 100 % by weight).

13. Use according to claim 12, **characterized in that** the concentrate is diluted with water in a ratio of 1:20 to 1:200.

## Revendications

1. Utilisation d'un produit contenant au moins un halogénure de tétra-alkyle ammonium comme substance active, et éventuellement d'autres adjuvants et excipients, en particulier des absorbeurs UV, pour lutter simultanément contre les graines de mauvaises herbes, les algues, les bactéries phytopathogènes, les champignons, les virus et les viroïdes, en particulier sur les sols, surfaces et outils de travail dans les serres, les cabanes à outils et/ou les maisons de jardin.

2. Utilisation selon la revendication 1, **caractérisée en ce que** pour ce qui est des sols et surfaces, il s'agit de sols et de surfaces de serres, de surfaces d'entreposage, de pots, de multiplaques et/ou d'outils.

3. Utilisation selon la revendication 1 ou 2, **caractérisé en ce que** l'halogénure de tétra-alkyle ammonium comprend des groupes n-alkyles, de préférence des groupes n-alkyles C₁ à C₁₀ indépendants les uns des autres.

4. Utilisation selon l'une des revendications 1 à 3, **caractérisée en ce que** l'ion halogénure de l'halogénure de tétra-alkyle ammonium est un chlorure.

5. Utilisation selon l'une des revendications 1 à 4, **caractérisée en ce que** l'halogénure de tétra-alkyle ammonium est du chlorure de didécyl-diméthyle-ammonium.

6. Utilisation selon l'une des revendications 1 à 5, **caractérisée en ce que** le produit comprend en outre un tensioactif non ionique, de préférence un polyalkylène-glycol-éther ou un éthoxylate d'alcool gras selon la formule I :
H₃C(CH₂)ₓ-O(CH₂-CH₂-O)_{y}-H (I)
où x = 10 à 17 et y = 1 à 25, et de préférence x = 12.

7. Utilisation selon l'une des revendications 1 à 6, **caractérisée en ce que** le produit comprend en outre un alcool C₁ à C₄ à chaîne droite ou ramifiée, de préférence du propan-2-ol.

8. Utilisation selon l'une des revendications 1 à 7, **caractérisée en ce que** pour ce qui est du produit, il s'agit d'un concentré sous la forme d'une solution aqueuse, composée de 30 à 35% en poids d'halogénure de tétra-alkyle ammonium, de 15 à 20% en poids d'éthoxylate d'alcool gras et de 5 à 10% en poids d'un alcool, le reste étant de l'eau (sur 100% en poids).

9. Utilisation selon la revendication 8, **caractérisée en ce que** le concentré est dilué à l'eau, selon un rapport de 1:20 à 1:200.

10. Utilisation selon l'une ou plusieurs des revendications 1 à 7, **caractérisé en ce que** le produit comprend en outre un acide benzoïque et/ou au moins un monohydrate d'acide, un dihydroxyde d'acide ou un trihydroxyde d'acide benzoïque.

11. Utilisation selon la revendication 10, **caractérisée en ce que** le produit comprend en outre un dérivé de phénol, sélectionné de préférence parmi la groupe constitué de 2-isopropyl-5-méthylphénol, de 2-, 3- ou 4-méthylphénol, d'hexylrésorcine, de 2-phénylphénol, de 2-méthoxyphénol, de 3-méthyle-4-chlorophénol, de 3,5-diméthyle-4-chlorophénol, de 2-benzyle-4-chlorophénol ou de mélanges de ceux-ci.

12. Utilisation selon l'une des revendications 10 ou 11, **caractérisée en ce que** pour ce qui est du produit, il s'agit d'un concentré sous la forme d'une solution aqueuse, composée de 30 à 35% en poids d'halogénure de tétra-alkyle ammonium, de 15 à 20% en poids d'éthoxylate d'alcool gras, de 5 à 10% en poids d'un alcool et de 5 à 40% en poids d'un acide carboxylique aliphatique ou aromatique, le reste étant de l'eau (sur 100% en poids).

13. Utilisation selon la revendication 12, **caractérisée en ce que** le concentré est dilué à l'eau, selon un rapport de 1:20 à 1:200.
